(19) Europäisches Patentamt
European Patent Office
Office européen des brevets

(11) **EP 2 551 578 A1**

(12) **EUROPEAN PATENT APPLICATION**

(43) Date of publication:
**30.01.2013 Bulletin 2013/05**

(21) Application number: **11175581.5**

(22) Date of filing: **27.07.2011**

(51) Int Cl.:
*F16N 29/02* (2006.01)     *F16N 29/04* (2006.01)
*F03D 11/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Siemens Aktiengesellschaft
80333 München (DE)**

(72) Inventors:
• **Bauer, Oto
7330 Brande (DK)**
• **Esbensen, Thomas
7400 Herning (DK)**

Remarks:
Amended claims in accordance with Rule 137(2) EPC.

(54) **Method for lubricating at least one bearing of a wind turbine**

(57) Method for lubricating at least one bearing of a wind turbine, particularly a variable-pitch wind turbine, the wind turbine (1) comprising a rotor hub (2) having a number of rotor blades (4), with each rotor blade being rotatably supported to the rotor hub by at least one blade pitch bearing, and a number of further bearings (6,7) allowing a rotatable support of at least two components of the wind turbine relative to each other,
the method comprising the steps of
- determining the state of lubrication of at least one of the further bearings by a lubrication detection device generating at least one lubrication information signal indicating a degree of lubrication of at least one respective further bearing by measuring the electrical capacitance and/or resistance of the respective further bearing, and
- actuating at least one bearing lubricating device to perform at least one action to lubricate the respective further bearing, if the lubrication information signal indicates that the respective further bearing is not sufficiently lubricated.

FIG 2

EP 2 551 578 A1

**Description**

The invention relates to a method for lubricating at least one bearing of a wind turbine, particularly a variable-pitch wind turbine, the wind turbine comprising the wind turbine comprising a rotor hub having a number of rotor blades, with each rotor blade being rotatably supported to the rotor hub by at least one blade pitch bearing, and a number of further bearings allowing a rotatable support of at least two components of the wind turbine relative to each other.

Modern wind turbines comprise a number of bearings allowing a rotatable support of at least two components of the wind turbine relative to each other. The bearings have to withstand high mechanical loads, especially in harsh wind conditions. It is understood that proper lubrication of the bearings is essential for maintaining or extending the lifetime of the bearings by reducing rolling resistance and wear. Hence, proper lubrication of the bearings is important for the operation of the wind turbine as a whole.

Additionally, worn bearings may negatively impact wind turbine operation or even lead to safety issues and risk of damaging other components of the wind turbine.

Therefore, various methods for lubricating the respective bearings have been proposed.

US 2010/0068055 A1 discloses a method for dynamically lubricating a wind turbine blade pitch bearing. The method comprises determining at least one wind turbine operating condition or parameter related to the pitch activity, determining if lubrication is needed depending on the operating operations or the pitch activity parameters and causing lubrication of the pitch blade bearing if the determination operation is positive.

In fact, the known methods regularly lead to an overfilling of the bearings with the lubricant, which can lead to excessive leakage. On the other hand, it may also occur that the bearings are not sufficiently lubricated. Aside, the current degree of lubrication of the respective further bearings allowing a rotatable support of at least two components of the wind turbine relative to each other is not taken into account by the known methods for lubricating the bearings.

Hence, the given strategies for lubricating the bearings of a wind turbine, that is particularly the further bearings allowing a rotatable support of at least two components of the wind turbine relative to each other, are not satisfactory.

Therefore, it is the object of the present invention to provide an improved method for lubricating respective bearings of a wind turbine, particularly assuring a proper lubrication of the respective bearings allowing a rotatable support of at least two components of the wind turbine relative to each other.

This is achieved by the method as described above, comprising the steps of determining the state of lubrication of at least one of the further bearings by a lubrication detection device generating at least one lubrication information signal indicating a degree of lubrication of at least one respective further bearing by measuring the electrical capacitance and/or resistance of the respective further bearing, and actuating at least one bearing lubricating device to perform at least one action to lubricate the respective further bearing, if the lubrication information signal indicates that the respective further bearing is not sufficiently lubricated.

The inventive method considers the current state of lubrication of one or more respective further bearings allowing a rotatable support of at least two components of the wind turbine relative to each other by means of the lubrication detection device generating the lubrication information signal in terms of a diagnosis system monitoring the state of lubrication of the respective bearings. That is, in contrast to prior art, the inventive method allows a determination of the current state of lubrication of each or individual or individual groups of bearings, whereby lubrication of the respective bearings is performed, when the lubrication information signal indicates that lubrication is necessary. That is, the bearing lubricating device is actuated, i.e. performs at least one action to lubricate the respective bearings. Thereby, the bearing lubricating device may inject additional lubricant into the at least one bearing and/or actuate a control device adapted to control rotation of at least one of the respective components of the wind turbine being rotatably supported relative to each other by means of the respective further bearing in order to lubricate the respective further bearing.

Generally, the inventive method is applicable and intended to be used for all bearings of wind turbine except for the blade pitch bearings supporting rotor blades to a rotor hub. Hence, the inventively used term "bearing" refers to all kinds of bearings apart from the blade pitch bearings. In particular, the inventive method is applicable for at least one yaw bearing rotatably supporting a nacelle on a tower of the wind turbine and/or at least one generator bearing rotatably supporting a rotor of a generator relative to a stator of the generator and/or at least one main bearing supporting the rotor hub and/or at least one gearbox bearing supporting the low speed shaft of the rotor.

Hence, referring to the yaw bearing the bearing lubricating device will preferably perform injecting additional lubricant since the yaw bearing usually rotates in dependence of the current wind direction.

Typically, the generator shaft of the wind turbine is always rotating. Hence, both the rotor and the generator bearing(s) are always rotating. Thus, referring to the generator bearing, the bearing lubricating device will preferably perform injecting additional lubricant when necessary, i.e. when the lubrication information signal indicates that the degree of lubrication is low.

The generation of the lubrication information signal indicating the degree of lubrication is based on a measurement of the electrical capacitance and/or resistance of the respective bearing or bearings. The measurement of the electrical capacitance and/or resistance of the respective bearings provides a proper information regarding the current degree of lubrication of the respective bearings, that is the respective degree of the lubrication of the respective bearings may be estimated to an utmost extent.

Determining the state of lubrication of the at least one bearing is preferably accomplished by determining the amount of lubricant, particularly the coating thickness h of the lubricant, between at least two components of the at least one bearing moving relatively to each other. The principle is based on assuming the electrical capacitance C of the lubricated bearing as the electrical capacitance C of a plate capacitor. Hence, the thickness h of the lubricant between two components of the respective bearing building contact points and moving relatively to each other, that is between an outer or inner ring and a rolling element such as a ball or the like, for instance, is given by equation (i)

$$C = \varepsilon_0 \varepsilon_r A / h \quad (\text{i})$$

with $\varepsilon_0$ representing the vacuum permittivity, $\varepsilon_r$ representing the relative permittivity or relative dielectric constant of the lubricant, and A representing the area under the lubricant.

The electrical capacitance $C$ of a bearing is determined by the capacitance $C_i$ representing the electrical capacitance between an inner ring and a rolling element and the electrical capacitance $C_o$ representing the electrical capacitance between an outer ring and a rolling element (cf. equation (ii)).

$$C = \sum_{n=i} \frac{C_i \cdot C_o}{C_i + C_o} \quad (\text{ii})$$

Thereby, a first exemplary measurement setup uses an AC voltage signal in order to determine the electrical capacitance C between the lubricated components of the bearings contacting each other. The electrical capacitance C may be determined when the respective bearing is operated or not operated, that is when the respective components of the bearing are in motion or standing.

According to an alternative exemplary measurement setup, the bearing is assumed as a combination of an electrical capacitance C and an electrical resistance R in presence of a lubricant. A known electrical resistance R is connected in series with the respective bearing with a constant DC voltage. The known resistance R is used to determine the current flowing in the electrical circuit. The use of a DC voltage is essential, since the capacitance C of the bearing is non-polar and therefore, inactive to DC current. Hence, possible voltage drops are only based on the electrical resistance R of the bearing. In such a manner, controlling of the electrical resistance R of the bearing allows the determination of the amount of lubricant, particularly the thickness h of the lubricant between two contact points of the respective components of the bearing.

The bearing lubricating device is actuated, when the electrical capacitance C and/or the electrical resistance R approaches respective reference value(s) since this indicates that lubrication of the bearing is not sufficient, that is the presence of only a small amount of lubricant between the respective components of the bearing.

It is also possible that the lubrication information signal is processed in such a manner that it indicates the degree of wear of the at least one (further) bearing. The determination of the degree of wear of the respective bearing is possible, since the presence of, particularly electrically conductive, particles within the lubricant originating from friction and abrasion gives rise to a change of the measured variables, that is the electrical capacitance C and/or the electrical resistance R. Electrically conductive particles between contact points of the bearing, that is between the outer ring and a rolling element for instance, lead to interferences in the measurement signal. This change in the measurement signal, that is the influence of the particles, may be levelled out by known averaging techniques. Thereby, the information on particles between the contact points of the respective bearing allows an indication of the degree of wear of the respective bearing, since an increase of the amount of particles between the contact points leads to a decrease in the electrical resistance R. Hence, information regarding the lifetime of the respective bearing is also obtainable through processing of the lubrication information signal.

In a further embodiment of the invention, the bearing lubricating device considers at least one internal parameter (or variable) and/or at least one external parameter (or variable) for performing the at least one action to lubricate the at least one (further) bearing. The information from the at least one additional parameter may be used to constraint or disable lubrication or adapt the lubrication strategy. In such a manner, a precise and appropriate lubrication of the respective bearing or bearings may be executed.

Thereby, temperature and/or pressure of a hydraulic oil and/or the speed of a rotor hub and/or the speed of a rotor of a generator and/or the speed of a rotor shaft and/or pitch angles and/or generated power or torque of a generator is considered as an internal parameter and wind speed and/or ambient temperature and/or ambient pressure and/or air density is considered as an external parameter. Of course, other internal and/or external parameters may be used as well; also internal states of the wind turbine control system.

Preferably, the lubrication information signal and/or lubricating parameters concerning at least one previous operation of the bearing lubricating device is stored in a memory unit, whereby the bearing lubricating device at least partially considers the data stored in the memory unit for performing the at least one action to lubricate the respective further bearing. In such a manner, historic data and findings may be considered. That is, the bearing lubricating device is adapted to compare the current situation with at least one, if need be like, situation from previous operations. Thereby, the current lubrication procedure may be optimised.

It is possible that the lubrication detection device generates at least one warning signal, if the at least one lubrication information signal indicates that the lubrication of the respective further bearing is not sufficient, particularly when the bearing lubricating device already has performed at least one action to lubricate the respective further bearing. The warning signal gives a hint that the current state of lubrication of the respective bearing is insufficient and thus, the operation and/or the condition of the bearing is or may be negatively affected. The warning signal may be logged and used by the wind turbine control system and may also be transmitted to a central station controlling the operation of the wind turbine by means of respective communication devices.

Furthermore, it is thinkable that the lubrication detection device generates a stop signal for stopping the operation of the wind turbine, if the at least one lubrication information signal indicates that the lubrication of the respective further bearing is not sufficient, particularly when the bearing lubricating device already has performed at least one action to lubricate the respective further bearing. In such a manner, the wind turbine is protected from damages, since its operation is turned off in the case of the lubrication detection device having detected insufficient lubrication of at least one respective bearing.

Aside, the invention relates to a wind turbine, particularly a variable-pitch wind turbine, especially adapted to execute the method as described before. The wind turbine comprises a rotor hub having a number of rotor blades, with each rotor blade being rotatably supported to the rotor hub by at least one blade pitch bearing, and a number of further bearings allowing a rotatable support of at least two components of the wind turbine relative to each other, at least one control device adapted to control rotation of at least one of the respective components of the wind turbine being rotatably supported relative to each other by means of the further bearings and a lubrication detection device adapted to generate at least one lubrication information signal indicating the degree of lubrication of at least one of the further bearings by measuring the electrical capacitance and/or resistance of the respective at least one further bearing. The lubrication detection device is adapted to actuate a bearing lubricating device adapted to perform at least one action to lubricate the respective further bearing, when the lubrication information signal indicates that the respective further bearing is not sufficiently lubricated, with the bearing lubricating device and the control device being adapted to communicate with each other.

Again, the inventively used term "bearing" refers to all kinds of bearings apart from the blade pitch bearings. In particular, the term bearing relates to at least one yaw bearing rotatably supporting a nacelle on a tower of the wind turbine and/or at least one generator bearing rotatably supporting a rotor of a generator relative to a stator of the generator.

Preferably, the bearing lubricating device is adapted to inject additional lubricant into the respective further bearing and/or actuate the control device to perform rotation of at least one of the respective components of the wind turbine being rotatably supported relative to each other by means of the respective further bearing in order to lubricate the respective further bearing. Hence, the respective bearings are protected from insufficient lubrication by the injection of an additional amount of lubricant or additionally or alternatively, rotational movements of the respective components of the wind turbine being rotatably supported relative to each other by means of the respective further bearing.

The wind turbine may comprise a memory unit adapted to store lubrication information and/or operational data concerning at least one previous operation of the bearing lubricating device, with the bearing lubricating device and the memory unit being adapted to communicate with each other. In such a manner, historic data of previous lubricating actions may be considered before executing the lubrication of the respective bearings. Thereby, the current lubrication procedure may be optimised.

Besides, the lubrication detection device is adapted to generate at least one warning signal, if the at least one lubrication information signal indicates that the lubrication of the respective further bearing is not sufficient, particularly when the bearing lubricating device already has performed at least one action to lubricate the respective further bearing. Thus, the case of at least one bearing being not sufficiently lubricated is perceivable by respective control systems, monitoring stations, service personal, or the like.

Furthermore, the lubrication detection device is adapted to generate a stop signal for stopping the operation of the wind turbine, if the at least one lubrication information signal indicates that the lubrication of the respective further bearing is not sufficient, particularly when the bearing lubricating device already has performed at least one action to lubricate the respective further bearing. Thus, the operation of the wind turbine may be stopped in the case of at least one respective bearing being not sufficiently lubricated, that is the risk of damages within the bearing and the wind turbine as a whole is diminished.

In the following, the invention is described in detail as reference is made to the figures, whereby:

Fig. 1     shows a principle view of a wind turbine according to an exemplary embodiment of the present invention;

Fig. 2     shows a block diagram of the inventive method; and

Fig. 3     shows a principle view of a rotor blade bearing with indicated electrical capacitances.

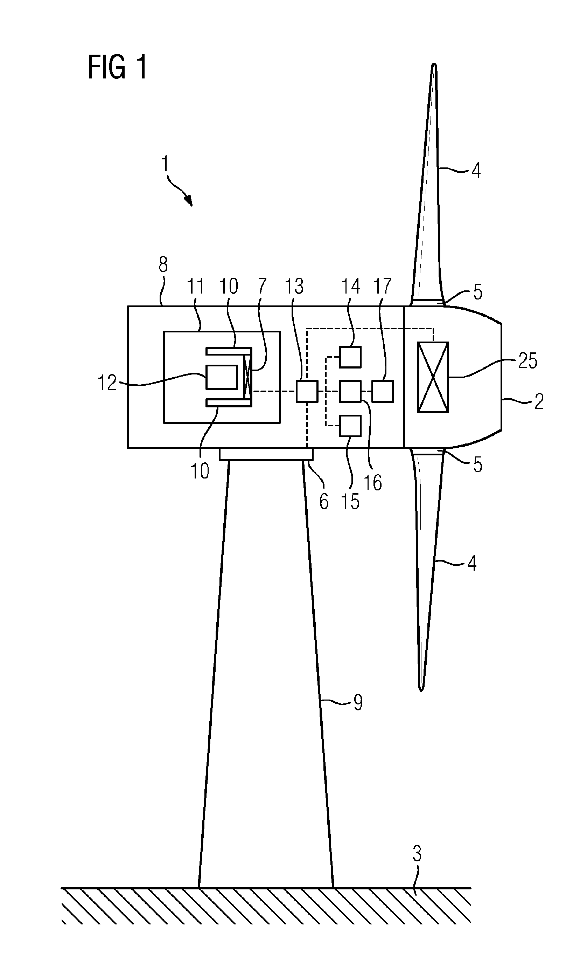

Fig. 1 shows a principle view of a wind turbine 1 according to an exemplary embodiment of the invention. The wind turbine 1 is built as a variable-pitch wind turbine and installed on ground 3.

The wind turbine 1 comprises a rotor hub 2 having a number of rotor blades 4 supported thereto 2 by means of respective bearings 5 (blade pitch bearings). The wind turbine 1 further comprises a number of further bearings 6, 7, 25 allowing a rotatable support of at least two components of the wind turbine relative to each other. Thereby, bearing 6 is a yaw bearing rotatably supporting a nacelle 8 on a tower 9 of the wind turbine 1. Bearing 7 is a generator bearing rotatably supporting a rotor 10 of a generator 11 in relative to a stator 12 of the generator 11. Bearing 25 is a main bearing rotatably supporting the rotor hub 2 relative to the nacelle 8 of the wind turbine 1.

Furthermore, a control device 13 is provided. The control device 13 is adapted to control rotation of at least one of the respective components of the wind turbine 1 being rotatably supported relative to each other by means of the further bearings 6, 7, 25. Hence, the control device 13 is adapted to control or perform concerted rotation of the rotor 10 relative to the stator 12 and/or the nacelle 8 relative to the tower 9 and/or the rotor hub 2 relative to the nacelle 8.

The wind turbine 1 further comprises a lubrication detection device 14 adapted to generate at least one lubrication information signal indicating the degree of lubrication of the respective bearings 6, 7, 25 by individually measuring the electrical capacitance and/or resistance of the respective bearings 6, 7, 25.

Aside, a bearing lubricating device 15 is provided. The bearing lubricating device 8 is adapted to perform at least one action to lubricate at least one of the bearings 6, 7, 25, when the lubrication information signal indicates that the respective bearing 6, 7, 25 is not sufficiently lubricated. The control device 13, the lubrication detection device 14 and the bearing lubricating device 15 communicate with each other. Additionally, the control device 13, the lubrication detection device 14 and the bearing lubricating device 15 are connected to a central control unit 16 adapted to control the control device 13, the lubrication detection device 14, and the bearing lubrication device 15. The central control unit 16 is preferably also connected to the generator 11 of the wind turbine 1.

The wind turbine 1 further comprises a memory unit 17 adapted to store lubrication information and/or operational data concerning at least one previous operation of the bearing lubricating device 14. The memory unit 17 is adapted to communicate with the bearing lubricating device 15 and/or the central control unit 16.

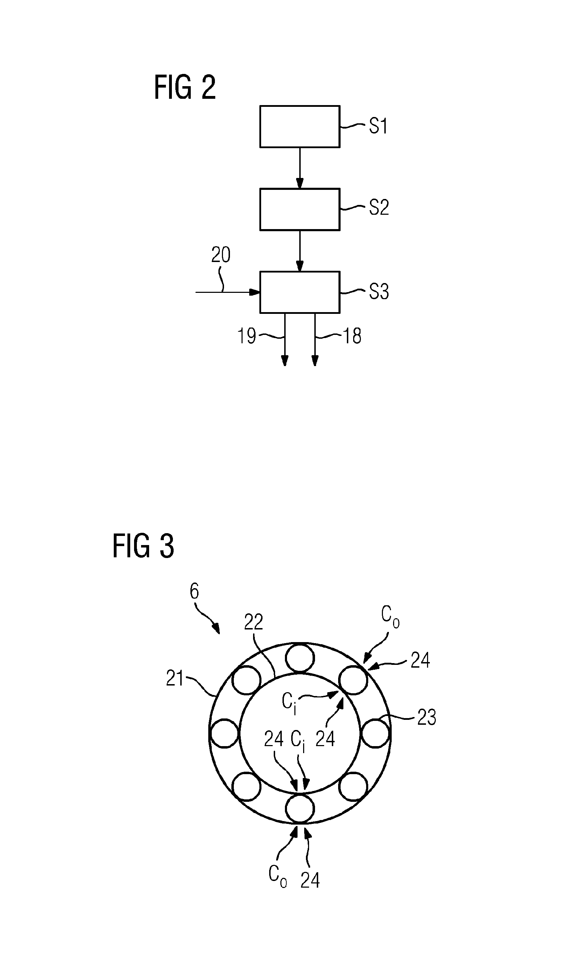

The method for lubricating of at least one of the bearings 6, 7, 25 of the wind turbine 1 is explained with respect to fig. 2. During normal operation of the wind turbine 1, the wind speed attacking the rotor blades 4 leads to rotation of the rotor hub 2 and further, to the generation of electric power by the generator 11 which may be directly coupled (direct drive wind turbine).

The state of lubrication of the respective bearings 6, 7, 25 is determined by the lubrication detection device 14 generating a lubrication information signal indicating a degree of lubrication of the respective bearings 6, 7, 25. In a first step S1 the electrical capacitance C and/or resistance R of the respective bearings 6, 7 is measured. In the following step S2 the measured electrical capacitance and/or resistance is processed for determining the state of lubrication of the respective bearings 6, 7, 25. Thereby, the amount of lubricant, particularly the coating thickness h of the lubricant, between at least two components of the respective bearings 6, 7, 25 moving relatively to each other (cf. fig. 3) is determined as described above. Generally, the measurement of the electrical capacitance C and/or resistance R and consequently, the determination of the state of lubrication of the respective bearings 6, 7, 25 may take place in continuous or intermittent manner.

In the case that the lubrication information signal indicates that at least one of the bearings 6, 7, 25 is not sufficiently lubricated, the bearing lubricating device 15 is actuated to perform at least one action to lubricate the respective bearing 6, 7, 25 in step S3, that is respective signals (cf. arrows 18, 19) are transmitted to the bearing lubricating device 15. Thereby, proper lubrication of the respective bearing(s) 6, 7, 25 is preferably achieved by injecting an additional and proper amount of lubricant into the respective bearing(s) 6, 7, 25 (corresponding to the respective signal as indicated by arrow 18) and/or actuating the control device 13 to perform rotation of at least one of the respective components of the wind turbine 1 being rotatably supported relative to each other by means of the respective bearings 6, 7, 25 (corresponding to the respective signal as indicated by arrow 19) so as to distribute the current amount of lubricant within the respective bearing 6, 7, 25 again.

With respect to the wind turbine 1 shown in fig. 1, the actuation of the bearing lubricating device 15 is executed either directly via the lubrication detection device 14 or the central control unit 16.

Thereby, the bearing lubricating device 15 considers at least one internal parameter and/or at least one external parameter (cf. arrow 20) for performing the respective action to lubricate the respective bearing(s) 6, 7, 25. Thereby, temperature and/or pressure of a hydraulic oil and/or the speed of the rotor hub 2 and/or the rotor 10 and/or a rotor shaft (not shown) of the generator 11 and/or pitch angles of the rotor blade 4 and/or generated power or torque of the generator 11 of the wind turbine 1 may be considered as an internal parameter. Wind speed and/or ambient temperature and/or ambient pressure and/or air density may be considered as an external parameter. The wind turbine 1 comprises appropriate sensors (not shown) for measuring the respective internal and/or external parameters, which sensors are adapted to communicate with the central control unit 16.

Further, the lubrication detection device 14 considers previous lubrication information signals and/or lubricating parameters concerning at least one previous operation of the bearing lubricating device 15 while generating the lubrication information signal. Therefore, the lubrication detection device 14 and/or the central control unit 16 communicates with the memory unit 17 containing historic data regarding previous lubrication actions of the bearing lubricating device 15.

The lubrication detection device 14 is further adapted to generate at least one warning signal, if the lubrication information signal indicates that the lubrication of at least one of the bearings 6, 7, 25 is not sufficient, that is particularly, when the bearing lubricating device 15 already has performed an action to lubricate the respective bearing(s) 6, 7, 25. In extreme cases it may be necessary that the lubrication detection device 14 generates a stop signal for stopping the operation of the wind turbine 1 in order to protect the wind turbine 1 from damages.

Fig. 3 shows a principle view of a rotor blade bearing 6 with indicated capacitances $C_i$ and $C_o$. The following annotations also apply to bearing 7. The bearing 6 comprises an outer ring 21, an inner ring 22, and rolling elements in the shape of balls 23 rolling on respective raceways. All components of the bearing 6 are provided, that is coated with lubricant. The bearing 6 comprises several measurement points 24 for measuring the electrical capacitance C of the bearing 5, whereby the capacitance C of the bearing 6 is determined by the capacitances $C_i$ between the inner ring 22 and the balls 23 and the capacitances $C_o$ between the outer ring 21 and the balls 23 (cf. equation (ii)) for instance. Hence, the lubrication detection device 14 comprises respective sensors (not shown) for obtaining the respective measurement signals, such that the capacitances $C_i$ and $C_o$ within the bearing 6, whereby the information from the sensors is processed to obtain the lubrication information signal.

Aside, the lubrication information signal may be processed in such a manner that it may indicate the degree of wear of a bearing 6. This is possible since particles originating from friction and abrasion lead to a change in the respective measurement signals of the sensors, that is the lubrication information signal changes depending on the presence of foreign particles within the lubricant mainly caused by a respective change of the electrical conductivity of the lubricant.

Hence, the inventive method allows a management of all issues regarding the lubrication of the respective bearings 6, 7, particularly determining when lubrication of at least one bearing 6, 7 is necessary. Thereby, the power production of the generator 11 of the wind turbine 1 is influenced as small as possible, since lubrication of the respective bearings 6, 7 is only performed when it is absolutely necessary. Further, damages of the wind turbine 1 caused by insufficient lubrication of the respective bearings 6, 7 are prevented.

**Claims**

1. Method for lubricating at least one bearing of a wind turbine, particularly a variable-pitch wind turbine, the wind turbine comprising a rotor hub having a number of rotor blades, with each rotor blade being rotatably supported to the rotor hub by at least one blade pitch bearing, and a number of further bearings allowing a rotatable support of at least two components of the wind turbine relative to each other,
the method comprising the steps of

   - determining the state of lubrication of at least one of the further bearings by a lubrication detection device generating at least one lubrication information signal indicating a degree of lubrication of at least one respective further bearing by measuring the electrical capacitance and/or resistance of the respective further bearing, and
   - actuating at least one bearing lubricating device to perform at least one action to lubricate the respective further bearing, if the lubrication information signal indicates that the respective further bearing is not sufficiently lubricated.

2. Method according to claim 1, wherein the used further bearing is a yaw bearing rotatably supporting a nacelle on a tower of the wind turbine and/or a generator bearing rotatably supporting a rotor of a generator relative to a stator of the generator and/or at least one main bearing supporting the rotor hub and/or at least one gearbox bearing supporting the low speed shaft of the rotor.

3. Method according to claim 1 or 2, wherein determining the state of lubrication of the respective further bearing is accomplished by determining the amount of lubricant, particularly, the coating thickness of the lubricant, between at least two components of the respective further bearing moving relatively to each other.

4. Method according to one of the preceding claims, wherein the lubrication information signal is processed in such a manner that it indicates the degree of wear of the respective further bearing.

5. Method according to one of the preceding claims, wherein the bearing lubricating device injects additional lubricant into the respective further bearing and/or actuates a control device adapted to control rotation of at least one of the respective components of the wind turbine being rotatably supported relative to each other by means of the respective further bearing in order to lubricate the respective further bearing.

6. Method according to one of the preceding claims, wherein the bearing lubricating device considers at least one internal parameter and/or at least one external parameter for performing the at least one action to lubricate the respective further bearing.

7. Method according to claim 6, wherein temperature and/or pressure of a hydraulic oil and/or the speed of a rotor hub and/or the speed of a rotor of a generator and/or the speed of a rotor shaft and/or pitch angles and/or generated power or torque of a generator is considered as an internal parameter and wind speed and/or ambient temperature and/or ambient pressure and/or air density is considered as an external parameter.

8. Method according to one of the preceding claims, wherein the lubrication information signal and/or lubricating parameters concerning at least one previous operation of the bearing lubricating device is stored in a memory unit, whereby the bearing lubricating device at least partially considers the data stored in the memory unit for performing the at least one action to lubricate the respective further bearing.

9. Method according to one of the preceding claims, wherein the lubrication detection device generates at least one warning signal, if the at least one lubrication information signal indicates that the lubrication of the respective further bearing is not sufficient, particularly when the bearing lubricating device already has performed at least one action to lubricate the respective further bearing.

10. Method according to one of the preceding claims, wherein the lubrication detection device generates a stop signal for stopping the operation of the wind turbine, if the at least one lubrication information signal indicates that the lubrication of the respective further bearing is not sufficient, particularly when the bearing lubricating device already has performed at least one action to lubricate the respective further bearing.

11. Wind turbine (1), particularly variable-pitch wind turbine, especially adapted to execute the method according to one of the preceding claims, comprising

- a rotor hub (2) having a number of rotor blades (4), with each rotor blade (4) being rotatably supported to the rotor hub (2) by at least one blade pitch bearing (5), and
- a number of further bearings (6, 7) allowing a rotatable support of at least two components of the wind turbine (1) relative to each other,
- at least one control device (13) adapted to control rotation of at least one of the respective components of the wind turbine (1) being rotatably supported relative to each other by means of the further bearings (6, 7) and
- a lubrication detection device (14) adapted to generate at least one lubrication information signal indicating the degree of lubrication of at least one of the further bearings (6, 7) by measuring the electrical capacitance and/or resistance of the respective at least one further bearing (6, 7), whereby
- the lubrication detection device (14) is adapted to actuate a bearing lubricating device (15) adapted to perform at least one action to lubricate the respective further bearing (6, 7), when the lubrication information signal indicates that the respective further bearing (6, 7) is not sufficiently lubricated, with the bearing lubricating device (15) and the control device (13) being adapted to communicate with each other.

12. Wind turbine according to claim 11, wherein the further bearing (6, 7) is a yaw bearing (6) rotatably supporting a nacelle (8) on a tower (9) of the wind turbine (1) and/or a generator bearing (7) rotatably supporting a rotor (10) of a generator (11) relative to a stator (12) of the generator (11).

13. Wind turbine according to claim 11 or 12, wherein the bearing lubricating device (15) is adapted to inject additional lubricant into the respective further bearing (6, 7) and/or actuate the control device (13) to perform rotation of at least one of the respective components of the wind turbine (1) being rotatably supported relative to each other by means of the respective further bearing (6, 7) in order to lubricate the respective further bearing (6, 7).

14. Wind turbine according to one of the claims 10 to 13, comprising a memory unit (17) adapted to store lubrication information and/or operational data concerning at least one previous operation of the bearing lubricating device (15), with the bearing lubricating device (15) and the memory unit (17) being adapted to communicate with each other.

15. Wind turbine according to one of the claims 10 to 14, wherein the lubrication detection device (14) is adapted to generate at least one warning signal, if the at least one lubrication information signal indicates that the lubrication of the respective further (6, 7) bearing is not sufficient, particularly when the bearing lubricating device (15) already has performed at least one action to lubricate the respective further bearing (6, 7).

16. Wind turbine according to one of the claims 10 to 15, wherein the lubrication detection device 814) is adapted to generate a stop signal for stopping the operation of the wind turbine (1), if the at least one lubrication information signal indicates that the lubrication of the respective further bearing (6, 7) is not sufficient, particularly when the bearing lubricating device (15) already has performed at least one action to lubricate the respective further bearing (6, 7).

**Amended claims in accordance with Rule 137(2) EPC.**

1. Method for lubricating at least one bearing of a wind turbine, particularly a variable-pitch wind turbine, the wind turbine comprising a rotor hub having a number of rotor blades, with each rotor blade being rotatably supported to the rotor hub by at least one blade pitch bearing, and a number of further bearings allowing a rotatable support of at least two components of the wind turbine relative to each other,
the method comprising the steps of

- determining the state of lubrication of at least one of the further bearings by a lubrication detection device generating at least one lubrication information signal indicating a degree of lubrication of at least one respective further bearing by measuring the electrical capacitance and/or resistance of the respective further bearing, and
- actuating at least one bearing lubricating device to perform at least one action to lubricate the respective further bearing, if the lubrication information signal indicates that the respective further bearing is not sufficiently lubricated, wherein
- the bearing lubricating device actuates a control device adapted to control rotation of at least one of the respective components of the wind turbine being rotatably supported relative to each other by means of the respective further bearing or injects additional lubricant into the respective further bearing and actuates the control device adapted to control rotation of at least one of the respective components of the wind turbine being rotatably supported relative to each other by means of the respective further bearing in order to lubricate the respective further bearing.

2. Method according to claim 1, wherein the used further bearing is a yaw bearing rotatably supporting a nacelle on a tower of the wind turbine and/or a generator bearing rotatably supporting a rotor of a generator relative to a stator of the generator.

3. Method according to claim 1 or 2, wherein determining the state of lubrication of the respective further bearing is accomplished by determining the amount of lubricant, particularly, the coating thickness of the lubricant, between at least two components of the respective further bearing moving relatively to each other.

4. Method according to one of the preceding claims, wherein the lubrication information signal is processed in such a manner that it indicates the degree of wear of the respective further bearing.

5. Method according to one of the preceding claims, wherein the bearing lubricating device considers at least one internal parameter and/or at least one external parameter for performing the at least one action to lubricate the respective further bearing.

**6.** Method according to claim 5, wherein temperature and/or pressure of a hydraulic oil and/or the speed of a rotor hub and/or the speed of a rotor of a generator and/or pitch angles and/or generated power of a generator is considered as an internal parameter and wind speed and/or ambient temperature and/or ambient pressure and/or air density is considered as an external parameter.

**7.** Method according to one of the preceding claims, wherein the lubrication information signal and/or lubricating parameters concerning at least one previous operation of the bearing lubricating device is stored in a memory unit, whereby the bearing lubricating device at least partially considers the data stored in the memory unit for performing the at least one action to lubricate the respective further bearing.

**8.** Method according to one of the preceding claims, wherein the lubrication detection device generates at least one warning signal, if the at least one lubrication information signal indicates that the lubrication of the respective further bearing is not sufficient, particularly when the bearing lubricating device already has performed at least one action to lubricate the respective further bearing.

**9.** Method according to one of the preceding claims, wherein the lubrication detection device generates a stop signal for stopping the operation of the wind turbine, if the at least one lubrication information signal indicates that the lubrication of the respective further bearing is not sufficient, particularly when the bearing lubricating device already has performed at least one action to lubricate the respective further bearing.

**10.** Wind turbine (1), particularly variable-pitch wind turbine, especially adapted to execute the method according to one of the preceding claims, comprising

- a rotor hub (2) having a number of rotor blades (4), with each rotor blade (4) being rotatably supported to the rotor hub (2) by at least one blade pitch bearing (5), and
- a number of further bearings (6, 7) allowing a rotatable support of at least two components of the wind turbine (1) relative to each other,
- at least one control device (13) adapted to control rotation of at least one of the respective components of the wind turbine (1) being rotatably supported relative to each other by means of the further bearings (6, 7) and
- a lubrication detection device (14) adapted to generate at least one lubrication information signal indicating the degree of lubrication of at least one of the further bearings (6, 7) by measuring the electrical capacitance and/or resistance of the respective at least one further bearing (6, 7), whereby
- the lubrication detection device (14) is adapted to actuate a bearing lubricating device (15) adapted to perform at least one action to lubricate the respective further bearing (6, 7), when the lubrication information signal indicates that the respective further bearing (6, 7) is not sufficiently lubricated, with the bearing lubricating device (15) and the control device (13) being adapted to communicate with each other, wherein
- the bearing lubricating device (15) is adapted to actuate the control device (13) to perform rotation of at least one of the respective components of the wind turbine (1) being rotatably supported relative to each other by means of the respective further bearing (6, 7) or the bearing lubricating device (15) is adapted to inject additional lubricant into the respective further bearing (6, 7) and to actuate the control device (13) to perform rotation of at least one of the respective components of the wind turbine (1) being rotatably supported relative to each other by means of the respective further bearing (6, 7) in order to lubricate the respective further bearing (6, 7).

**11.** Wind turbine according to claim 10, wherein the further bearing (6, 7) is a yaw bearing (6) rotatably supporting a nacelle (8) on a tower (9) of the wind turbine (1) and/or a generator bearing (7) rotatably supporting a rotor (10) of a generator (11) relative to a stator (12) of the generator (11).

**12.** Wind turbine according to one of the claims 9 to 11, comprising a memory unit (17) adapted to store lubrication information and/or operational data concerning at least one previous operation of the bearing lubricating device (15), with the bearing lubricating device (15) and the memory unit (17) being adapted to communicate with each other.

**13.** Wind turbine according to one of the claims 9 to 12, wherein the lubrication detection device (14) is adapted to generate at least one warning signal, if the at least one lubrication information signal indicates that the lubrication of the respective further (6, 7) bearing is not sufficient, particularly when the bearing lubricating device (15) already has performed at least one action to lubricate the respective further bearing (6, 7).

**14.** Wind turbine according to one of the claims 9 to 13, wherein the lubrication detection device (14) is adapted to generate a stop signal for stopping the operation of the wind turbine (1), if the at least one lubrication information signal indicates that the lubrication of the respective further bearing (6, 7) is not sufficient, particularly when the bearing lubricating device (15) already has performed at least one action to lubricate the respective further bearing (6, 7).

FIG 1

FIG 2

S1

S2

20

S3

19   18

FIG 3

6

22   $C_0$

21   24

$C_i$

23

24 $C_i$ 24

$C_0$ 24

Europäisches
Patentamt

European
Patent Office

Office européen
des brevets

**EUROPEAN SEARCH REPORT**

Application Number

EP 11 17 5581

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | DE 103 13 060 A1 (FRAUNHOFER GES FORSCHUNG [DE]) 21 October 2004 (2004-10-21)<br>* paragraphs [0003], [0020], [0030], [0032]; figure 2 *<br>----- | 1,2,4-16<br>3 | INV.<br>F16N29/02<br>F16N29/04<br>F03D11/00 |
| Y | EP 0 288 940 A2 (HONEYWELL INC [US]) 2 November 1988 (1988-11-02)<br>* page 3, line 11 - page 4, line 54; figures 1-2,4-5 *<br>----- | 3 | |
| A | US 6 877 360 B1 (-) 12 April 2005 (2005-04-12)<br>* column 9, lines 59-62 *<br>----- | 10,14 | |
| A | EP 2 299 159 A2 (MOVENTAS OY [FI]) 23 March 2011 (2011-03-23)<br>* paragraphs [0011], [0012], [0019] *<br>----- | 1,11 | |
| | | | TECHNICAL FIELDS SEARCHED (IPC)<br><br>F16N<br>F03D |

The present search report has been drawn up for all claims

| Place of search | Date of completion of the search | Examiner |
|---|---|---|
| The Hague | 15 December 2011 | Flamme, Emmanuel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 11 17 5581

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2011

| Patent document cited in search report | | Publication date | Patent family member(s) | | Publication date |
|---|---|---|---|---|---|
| DE 10313060 | A1 | 21-10-2004 | NONE | | |
| EP 0288940 | A2 | 02-11-1988 | CA | 1304129 C | 23-06-1992 |
| | | | DE | 3867893 D1 | 05-03-1992 |
| | | | EP | 0288940 A2 | 02-11-1988 |
| | | | JP | 63290936 A | 28-11-1988 |
| | | | US | 5001435 A | 19-03-1991 |
| US 6877360 | B1 | 12-04-2005 | NONE | | |
| EP 2299159 | A2 | 23-03-2011 | NONE | | |

**EP 2 551 578 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100068055 A1